(19) Europäisches Patentamt

European Patent Office

Office européen des brevets

(11) **EP 1 977 942 B1**

(12) **FASCICULE DE BREVET EUROPEEN**

(45) Date de publication et mention
de la délivrance du brevet:
**30.12.2009 Bulletin 2009/53**

(51) Int Cl.:
***B60T 8/172*** *(2006.01)*

(21) Numéro de dépôt: **08154069.2**

(22) Date de dépôt: **04.04.2008**

(54) **Procédé de détection et d'estimation d'un phénomène d'hydroplanage d'un pneumatique sur une chaussée mouillée**

Verfahren zur Erkennung und Abschätzung eines Aquaplaning-Phänomens eines Reifens auf einer nassen Fahrbahn

Method of detecting and estimating a hydroplaning phenomenon of a tyre on a wet road

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.04.2007 FR 0702574**

(43) Date de publication de la demande:
**08.10.2008 Bulletin 2008/41**

(73) Titulaires:
• **Société de Technologie Michelin**
**63000 Clermont-Ferrand (FR)**
• **MICHELIN Recherche et Technique S.A.**
**1763 Granges-Paccot (CH)**

(72) Inventeur: **Spetler, Frédéric**
**63190 Lezoux (FR)**

(74) Mandataire: **Dequire, Philippe Jean-Marie Denis**
**23, Place des Carmes-Déchaux**
**SGD/LG/PI F35 Ladoux**
**63040 Clermont-Ferrand Cedex 09 (FR)**

(56) Documents cités:
**EP-A- 1 498 291      WO-A-01/89896**
**DE-A1- 4 242 726     DE-A1-102004 051 654**

EP 1 977 942 B1

**Description**

La présente invention a trait à la détection puis à l'évaluation d'un début d'hydroplanage d'un pneumatique sur une chaussée mouillée parcourue par un véhicule. A cet effet, on procède à la mesure de contraintes (ou toute autre mesure équivalente, comme déplacements ou déformations) dans la bande de roulement d'un pneumatique du véhicule.

Il est en effet utile de pouvoir non seulement détecter mais aussi quantifier un phénomène d'hydroplanage apparaissant au niveau d'un pneumatique.

Un phénomène d'hydroplanage se caractérise par la présence momentanée d'une quantité d'eau entre la surface du sol composant la chaussée et la surface de la bande de roulement du pneumatique en contact avec ce même sol. Or, la présence d'eau, même momentanée, entre ces deux surfaces procure l'effet d'un film isolant. Un tel film empêche tout ou partie des transferts d'efforts entre le ou les pneumatiques du véhicule et la chaussée. En conséquence, ce phénomène engendre des pertes d'adhérence, de motricité lors d'accélération ou de freinage et également une perte de commande de direction notamment dans les courbes.

Ce film d'eau se forme lorsque le débit d'eau circulant entre les deux surfaces concernées devient supérieur au débit d'eau que peut évacuer à la fois le motif du revêtement du sol correspondant à la chaussée et les dessins du pneumatique. Cet effet de saturation est alors, à hauteur d'eau constante sur la chaussée, plus soudain et plus important à mesure que la vitesse du véhicule augmente. De façon complémentaire, à vitesse constante, l'effet de saturation survient plus rapidement si la hauteur d'eau présente sur le sol de la chaussée augmente.

Les conséquences d'un hydroplanage suite à un effet de saturation notamment lors d'une accélération par effort moteur, lors d'une décélération par effort freineur ou lors d'un changement de direction sont sérieuses et impliquent une perte partielle voire totale de contrôle du véhicule. Il est donc capital lors d'une évolution sur une chaussée mouillée de pouvoir anticiper les conditions d'un hydroplanage et mieux encore de le quantifier.

Vis-à-vis du conducteur du véhicule, aucun signe annonciateur, hormis la vision d'une route mouillée, ne précède le début d'un phénomène partiel ou total d'hydroplanage : le danger est alors imprévisible.

De plus, la mesure d'un hydroplanage est une information qui s'avère essentielle vis à vis des divers dispositifs d'assistance électronique utilisés par exemple pour la régulation de l'antiblocage des freins d'un véhicule (ABS), la régulation de l'antipatinage des roues motrices (ASR), le contrôle de trajectoires (ESP) ou pour d'autres formes de contrôle ou de surveillances comme, par exemple, la pression des pneus. En effet, cette information couplée, par exemple, à la mesure de l'adhérence ($\mu$) pourrait permettre d'améliorer grandement l'efficacité, en temps réel, des dispositifs ci-dessus nommés.

Ainsi, au moment de la détection d'un début de phénomène d'hydroplanage, une alerte peut non seulement être signifiée au conducteur du véhicule mais une mesure correspondante à l'intensité de cet hydroplanage peut aussi être communiquée aux différents dispositifs de sécurité active visés précédemment ce, afin de modifier ou d'affiner leurs paramètres de déclenchement.

Il est connu par le document US-A-5 502 433 de détecter un phénomène d'hydroplanage mais le document n'enseigne en rien du moyen ou de la façon de le quantifier sauf à déterminer un seuil d'alerte préétablie ne tenant aucunement compte de la hauteur d'eau susceptible d'être présente sur la chaussée au moment du phénomène. Or, le paramètre hauteur d'eau modifie considérablement, à vitesse constante, à la fois le moment où se déclenche un début d'hydroplanage et l'intensité de ce dernier. La détermination de façon préétablie, tel que prévoit le document cité, du niveau d'un seuil à partir duquel est supposé se déclencher un hydroplanage réduit alors l'opportunité voire la fiabilité de l'alerte déclenchée.

Le document EP 1 498 291 décrit une détection d'hydroplanage à l'aide d'une estimation de la longueur de la zone de contact d'un pneumatique sur la chaussée.

L'invention se propose de résoudre ces problèmes.

Dans ce qui suit, en dehors d'indications différentes, on entend généralement par :

- « aire de contact apparente » : la portion de la bande de roulement du pneumatique dans laquelle le ou les capteurs de la bande de roulement donnent un signal non nul ;
- aire de « contact direct » : la portion de la bande de roulement du pneumatique dans laquelle le contact entre le sol et la bande de roulement est direct ; et
- aire de « contact indirect » : la portion de la bande de roulement du pneumatique dans laquelle un film d'eau est disposé entre la bande de roulement et le sol.

L'invention a donc pour objet un procédé de détection puis d'évaluation de l'intensité d'un phénomène d'hydroplanage d'un pneumatique d'un véhicule évoluant sur un sol mouillé d'une chaussée, la bande de roulement du pneumatique étant équipée d'un ou plusieurs capteurs permettant chacun de mesurer une grandeur caractéristique des sollicitations que subit localement la bande de roulement lorsque le pneumatique roule sur le sol, caractérisé en ce qu'il comporte les étapes suivantes :

- mesurer ladite grandeur caractéristique lorsque le pneumatique roule sur le sol ;
- produire un signal correspondant à ces mesures ;
- extraire de ce signal une portion relative au passage du ou des capteurs dans l'aire de contact apparente du pneumatique sur le sol ;

- déduire de cette portion du signal une première valeur momentanée (ΔL) reliée à la longueur de la zone de contact indirect de l'aire de contact apparente de la bande de roulement du pneumatique sur le sol et une seconde valeur momentanée (ΔE, $R_z$, $A_x$) reliée à l'intensité du phénomène d'hydroplanage dans la zone de contact indirect relativement au reste de l'aire de contact apparente ;
- estimer la hauteur d'eau ($h_e$) à partir d'un calcul prenant en compte la première valeur momentanée déduite (ΔL) ; et
- estimer l'intensité du phénomène d'hydroplanage à partir de l'estimation de la hauteur d'eau ($h_e$) et de la seconde valeur momentanée (ΔE, $R_z$, $A_x$).

Selon un premier mode de mise en oeuvre de l'invention, la grandeur mesurée par le capteur est caractéristique des contraintes de compression subies par la bande de roulement du pneumatique dans une direction normale au plan de la chaussée.

L'étape de déduction d'une première valeur momentanée (ΔL) correspond alors à :

- lorsque la portion de signal comprend deux plateaux successifs, la valeur momentanée (ΔL) est la mesure de la longueur du premier plateau, du côté de l'entrée de l'aire de contact apparente ;
- lorsque la portion comprend un seul plateau, la valeur momentanée est zéro.

L'étape de déduction d'une seconde valeur momentanée (ΔE) correspond à :

- dériver la portion de signal ;
- déterminer les valeurs minimale $\left(\dfrac{d\sigma_z}{dx}\right)_{\min}$ et

  maximale $\left(\dfrac{d\sigma_z}{dx}\right)_{\max}$ du signal dérivé ainsi que

  leurs positions ($l_{min}$, $l_{max}$) ; et
- calculer la valeur momentanée (ΔE) correspondant à l'écart de position entre les valeurs minimale et maximale du signal dérivé :

$$\Delta E = l_{min} - l_{max}$$

La position d'un point de mesure correspond à un relevé longitudinal où est effectué la mesure de la contrainte de compression $\sigma_z$, selon un déploiement linéaire de la partie de la bande de roulement correspondant à la portion du signal extraite et $\dfrac{d\sigma_z}{dx}$ représente

la dérivée première de la mesure de contrainte selon la valeur x de la position du capteur sur l'axe longitudinal X de roulement du pneumatique dans le plan de la chaussée.

Avantageusement, on déclenche une alarme lorsque la seconde valeur momentanée ΔE est supérieure à un seuil donné.

L'étape de déduction d'une seconde valeur momentanée ($R_z$) peut aussi correspondre à :

- lorsque la portion du signal comprend deux plateaux successifs, la valeur momentanée ($R_z$) est égale à :

$$R_z = \frac{\sigma_{zi} - \sigma_{zd}}{\sigma_{zd}}$$

  dans lequel $\sigma_{zi}$ représente l'amplitude des contraintes de compression du premier plateau, et $\sigma_{zd}$ représente l'amplitude des contraintes de compression du second plateau ; et
- lorsque la portion comprend un seul plateau, la valeur momentanée ($R_z$) est égale à -1.

Avantageusement, une alarme est déclenchée lorsque la valeur momentanée ($R_z$) est supérieure à une valeur donnée et préférentiellement lorsque la valeur momentanée ($R_z$) est positive.

Selon un second mode de mise en oeuvre de l'invention, la grandeur mesurée par le capteur est caractéristique des contraintes de cisaillement longitudinal subies par la bande de roulement du pneumatique. La direction longitudinale X correspond à la direction de roulement du pneumatique sur la chaussée.

L'étape de déduction d'une première valeur momentanée (ΔL) correspond alors à :

- lorsque la portion du signal comprend, du côté de l'entrée de l'aire de contact, deux pics positifs successifs, la valeur momentanée est la mesure de la longueur (ΔL) séparant les maxima des deux pics ;
- lorsque la portion comprend un seul pic positif, la valeur momentanée (ΔL) est zéro.

L'étape de déduction d'une seconde valeur momentanée ($A_x$) correspond à :

- lorsque la portion comprend, du côté de l'entrée de l'aire de contact apparente, deux pics positifs successifs, la valeur momentanée ($A_x$) est la mesure de l'amplitude du premier pic positif ;
- lorsque la portion comprend un seul pic positif, la

valeur momentanée ($A_x$) est zéro.

Selon un mode de mise en oeuvre préférentiel de l'invention, le capteur mesure à la fois une grandeur caractéristique des contraintes de compression normale et une grandeur caractéristique des contraintes de cisaillement longitudinal subies par la bande de roulement du pneumatique.

L'obtention des portions de signaux liés à ces deux grandeurs caractéristiques des sollicitations permet de rendre plus robuste la détection et l'estimation de l'intensité du phénomène d'hydroplanage rencontré.

Avantageusement, la hauteur d'eau ($h_e$) présente sur la chaussée est déduite de la première valeur momentanée ($\Delta L$) en utilisant un abaque.

Un tel abaque peut effectivement être constitué à partir de mesures expérimentales réalisées avec plusieurs hauteurs d'eau contrôlées.

Alternativement on peut déduire la hauteur d'eau ($h_e$) en utilisant l'équation suivante :

$$h_e = K\left\{1 - \cos(\arcsin\frac{\Delta L}{K})\right\}$$

avec $h_e$ hauteur d'eau estimée, $\Delta L$ la valeur momentanée et $K$ une valeur constante liée au pneumatique. Une excellente estimation du facteur $K$ est le petit rayon de raccordement de Koutny ($R_K$). On peut représenter les variations de courbure de la ceinture d'un pneumatique à l'aide d'un modèle géométrique simple appelé modèle de Koutny. Ce modèle est composé de trois arcs de cercles tangents : un arc de cercle correspondant à la courbure dans la partie supérieure du pneumatique, deux arcs de cercle identiques correspondant à la courbure du pneumatique à l'entrée et à la sortie de l'air de contact. Connaissant la longueur de l'aire de contact et la circonférence, invariante, de la ceinture, ce modèle permet de calculer le petit rayon de raccordement. Ce petit rayon est bien connu de l'homme du métier du pneumatique.

De façon avantageuse on peut estimer l'intensité du phénomène d'hydroplanage à partir de la grandeur $1 - S/S_0$ fonction de deux surfaces :

- une première surface S déterminant une surface instantanée d'aire de contact direct de la bande de roulement du pneumatique mesurée sur un sol mouillé à la vitesse du véhicule ; et
- une seconde surface $S_0$ déterminant l'aire de contact direct idéale maximale de la bande de roulement du pneumatique sur le même sol sec et/ou pour une faible vitesse du véhicule garantissant l'absence d'un début d'hydroplanage.

On détermine alors la grandeur $1 - S/S_0$ caractérisant l'intensité du phénomène d'hydroplanage à partir :

- de la connaissance d'au moins une seconde valeur momentanée ($\Delta E$, $R_z$, $A_x$) ;
- d'un calcul estimé d'une hauteur d'eau ($h_e$) présente au sol ; et
- d'un abaque expérimental représentant l'évolution de la grandeur $1 - S/S_0$ en fonction de la seconde valeur momentanée ($\Delta E$, $Rz$, $A_x$) et ce pour différentes hauteurs d'eau ($h_e$) prédéterminées.

Et avantageusement, on déclenche une alarme lorsque la grandeur $1 - S/S_0$ dépasse un seuil donné.

Le procédé selon l'invention tient ainsi compte de mesures de contraintes de cisaillement longitudinal ou normales de compression (ou toute autre mesure équivalente, comme déplacements ou déformations) prises à partir de capteurs intégrés au pneumatique permettant, selon un critère déterminé fonction de la contrainte étudiée, tout d'abord de détecter un phénomène d'hydroplanage puis toujours grâce à ce critère de déterminer une grandeur $1 - S/S_0$ quantifiant la phénoménologie de l'hydroplanage. Une première surface S détermine l'aire de contact avec un sol sec ou humide de la bande de roulement du pneumatique en temps réel à l'instant de la mesure selon une vitesse choisie et une seconde surface $S_0$ détermine l'aire de contact avec un sol sec de la bande de roulement d'un pneumatique ou selon une vitesse suffisamment faible évitant toute possibilité d'hydroplanage. Plus précisément, la surface S ne tient pas compte d'une surface de la bande de roulement éventuellement placée contre le film formé par un phénomène d'hydroplanage. Dans ce cas, le contact entre la bande de roulement et le sol est indirect et ne transmet pas fidèlement les efforts du pneumatique, exigés par le conducteur du véhicule, sur la chaussée. La surface S correspond donc à la surface $S_0$ déduite de la surface du film d'eau présent entre le pneumatique et la chaussée et caractéristique d'un début d'hydroplanage.

Ainsi on établit, au préalable, par des mesures expérimentales, des courbes sous la forme d'un abaque définissant la grandeur caractéristique $1 - S/S_0$ en fonction de la vitesse de roulage du pneumatique et ce pour différentes hauteurs d'eau. Puis on détermine un critère analysable à partir de mesures de contraintes effectuées directement sur le pneumatique. Ce critère doit refléter fidèlement, pour une vitesse donnée, les résultats obtenus sur une courbe de l'abaque.

En effet, à partir de la connaissance de la vitesse du véhicule et donc du pneumatique et à partir d'une hauteur d'eau au contact d'un pneumatique, il est éventuellement possible directement à partir de l'abaque d'évaluer la grandeur $1 - S/S_0$ caractéristique du phénomène d'hydroplanage mais cette façon de procéder n'est pas totalement satisfaisante car elle ne tient pas compte du phénomène local de l'hydroplanage dépendant aussi de la qualité du sol se trouvant sous chaque pneumatique. Sur une chaussée, le revêtement peut, en effet, différer d'un côté à l'autre du véhicule. De plus, les conditions sont différentes selon qu'il s'agisse des pneumatiques avant ou arrière qui disposent, pour ces derniers, d'une trace sur la route un peu asséchée par les pneumatiques avant. Il est donc nécessaire d'établir la détermination puis la quantification d'un critère dépendant ou fonction d'une mesure de contrainte locale d'un pneumatique.

Ainsi, une fois cette corrélation vérifiée non seulement pour différentes vitesses du pneumatique et/ou du véhicule mais aussi pour différentes hauteur d'eau, au moment des mesures, l'invention permet, à partir de la détection du critère de détecter l'apparition d'un phénomène d'hydroplanage. Par ailleurs, la quantification de ce critère permet alors de définir la grandeur $1 - S/S_0$ caractéristique de l'hydroplanage et d'en évaluer l'intensité.

Cela impose néanmoins de connaître, en plus du critère et au moment de sa mesure, la hauteur d'eau présente au contact de la bande de roulement du pneumatique afin de sélectionner la courbe correspondante de l'abaque et par corrélation d'en déduire la grandeur $1 - S/S_0$.

On peut ainsi, par exemple, déterminer un seuil fonction d'une valeur constante de $1 - S/S_0$ tenant compte des mesures locales, hauteur d'eau et critère, prises directement et en temps réel sur un pneumatique. Cette grandeur $1 - S/S_0$ caractérise alors le pourcentage et donc l'intensité du phénomène.

Ainsi, aux extrêmes, pour une valeur de $1 - S/S_0$ égale à 0, les deux surfaces sont identiques et il y a 100 % d'adhérence disponible et 0% d'hydroplanage et pour une valeur de $1 - S/S_0$ égale à 1, la surface S est nulle et il y a 0 % d'adhérence d'adhérence disponible et 100% d'hydroplanage. Dans ce dernier cas, le contrôle du véhicule à partir de ce pneumatique n'est plus du tout possible.

Entre ces deux valeurs, on se situe, par exemple, à 30, 40 ou 70% du phénomène d'hydroplanage pour des valeurs respectives de $1 - S/S_0$ de 0.3, 0.4 et 0.7.

L'invention a aussi pour objet un dispositif de détection et d'estimation de l'intensité d'un phénomène d'hydroplanage d'un pneumatique d'un véhicule évoluant sur un sol mouillé d'un chaussée comportant :

- un pneumatique dont une bande de roulement est équipée d'un ou plusieurs capteurs (5) permettant, chacun, de mesurer une grandeur caractéristique des sollicitations subies par la bande de roulement du pneumatique en roulage sur le sol ;
- des moyens de transmission d'un signal correspondant aux mesures de cette grandeur caractéristique ;
- une unité de traitement de signaux capable d'extraire du signal transmis, une portion de signal correspondant au nombre ou à la durée de passage du ou des capteurs dans l'aire de contact du pneumatique en roulage sur le sol ;

caractérisé en ce qu'il comporte, dans l'unité de traitement, un programme pour, à partir du signal extrait mettre en oeuvre le procédé selon l'invention.

L'invention sera mieux comprise à la lecture de la description qui suit et à l'examen des figures qui l'accompagnent. Ces figures ne sont présentées qu'à titre indicatif et nullement limitatif de l'invention.

Les figures montrent :

- Figure 1 : une représentation d'un capteur dans la bande de roulement d'un pneumatique ;
- Figure 2 : une représentation illustrant le dispositif proposé par l'invention ;
- Figure 3 une courbe représentant la grandeur $1 - S/S_0$ en fonction de la vitesse du pneumatique et pour deux hauteurs d'eau de 2 et 8 mm ;
- Figures 4 et 5 : des courbes représentant des relevés de mesures de contraintes de compression normales dans l'aire de contact du pneumatique en fonction de différentes vitesses de roulage et pour deux hauteurs d'eau déterminées, respectivement 2 mm et 8 mm ;
- Figures 6 et 7 : des courbes représentant des relevés de mesures de contraintes longitudinales de cisaillement dans l'aire de contact du pneumatique en fonction de différentes vitesses de roulage et pour deux hauteurs d'eau déterminées, respectivement 2 mm et 8 mm ;

- Figure 8 : une représentation schématique du rapport entre la hauteur d'eau et l'allongement de l'aire de contact apparent du pneumatique ;
- Figure 9 : une comparaison entre les valeurs théoriques et expérimentales reliant hauteur d'eau et allongement de l'aire de contact ;
- Figures 10 et 11 : des courbes représentant la dérivée première selon la valeur x du déplacement du capteur sur l'axe X des mesures de contraintes illustrées aux figures 4 et 5 ;
- Figure 12 : l'évolution en fonction de la vitesse d'un critère $\Delta E$ ; et
- Figure 13 : une évolution en fonction de la vitesse d'un critère $R_z$ ;

- Figures 14, 15 et 16 : l'évolution de la grandeur

$$1 - \frac{S}{S_0}$$ en fonction des critères $A_x$, $\Delta E$ et $R_z$.

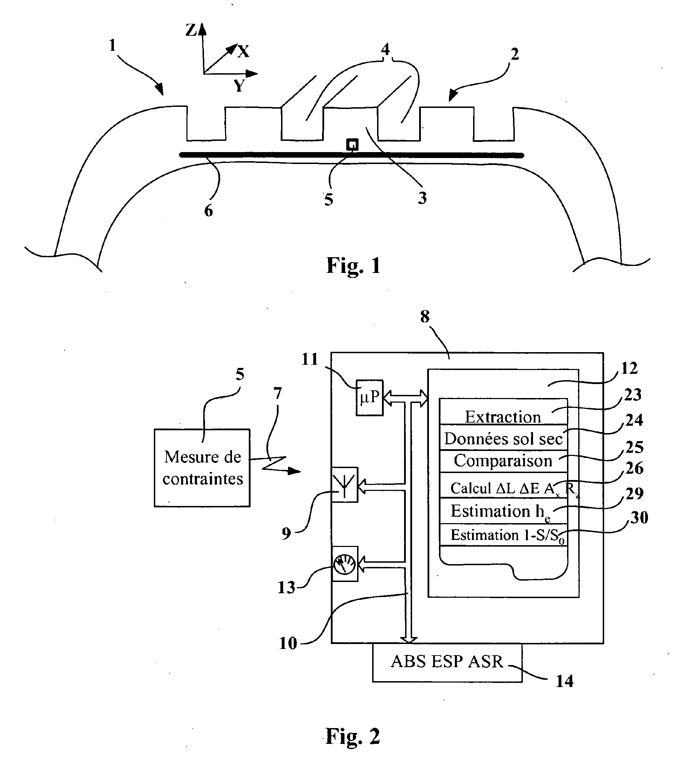

Sur la figure 1 est représentée très schématiquement une coupe axiale partielle d'un pneumatique 1 avec sa bande de roulement 2. Cette bande de roulement peut également correspondre à celle d'un bandage élastique non pneumatique.

La surface extérieure de la bande de roulement d'un pneumatique n'est pas lisse mais comprend usuellement un ensemble de sillons longitudinaux 4 et de rainures transversales ou sensiblement transversales pour faciliter l'évacuation de l'eau sur des chaussées mouillées. Les sillons et rainures définissent des pains de gomme qui viennent en contact avec le sol. L'ensemble correspond à la sculpture du pneumatique. A la figure 1, le pain de gomme 3 est disposé entre deux sillons 4 ainsi que deux rainures transversales non représentées.

Certains de ces pains 3 comportent un capteur 5 de contraintes (ou autre grandeur équivalente), on obtient alors un pain de mesure. Ce capteur 5 est implanté à la base du pain de mesure 3 et au-dessus des nappes de renforcement 6 de la structure du pneumatique. L'essentiel est de placer le capteur 5 dans un volume de la gomme du pneumatique qui ne subira pas d'usure durant la durée de vie du pneumatique. De la sorte, les mesures sont possibles durant toute la durée de vie du pneumatique. Selon l'invention, les capteurs mesurant les contraintes sont placés, de préférence, sur des pains 3 placés au centre d'une largeur de pneumatique selon l'axe Y de la figure 1 c'est-à-dire entre ses deux épaules. Un placement de ce capteur à l'épaule reste néanmoins aisément possible dans le cadre de l'invention.

L'objectif de ces capteurs est de pouvoir mesurer une contrainte (ou une force) subie par la bande de roulement 2 du pneumatique ou, selon une variante, un déplacement voire une déformation de cette bande de roulement 2.

Les capteurs utilisés fonctionnent selon différentes technologies, il peut s'agir de jauges piézo-électriques ou piezo-résistives ou de condensateurs. On peut ainsi, par exemple, associer un capteur à effet Hall avec son élément magnétique l'ensemble noyé dans la gomme du pneumatique. On pourra pour plus de précision concernant les technologies employées pour ces capteurs se reporter à la lecture du document US-B-6 666 079 qui donne une description concernant différents capteurs de contrainte utilisés dans un pneumatique.

La figure 2, illustre le dispositif de mesure de l'invention comportant les capteurs 5 de mesure de contraintes ainsi que des moyens 7 de transmission du signal à une unité 8 de traitement de signaux. Le module de traitement 8 est, de préférence, placé dans le véhicule. On peut, dans une variante, placer ce module 8 dans le pneumatique lui-même. Selon cette variante, cela nécessite des moyens de transmission du signal traité, au conducteur du véhicule.

L'homme du métier connaît par ailleurs les différentes formes possibles de moyens de transmission pour transmettre un signal entre un pneumatique et le véhicule. On peut, à cet effet, se reporter au document EP-A-1 350 640 qui illustre notamment un moyen dans lequel une antenne est implantée dans le pneumatique. Cette antenne est positionnée à l'intérieur même de la bande de roulement 2 et est reliée par un câble au capteur 5.

Il peut s'agir d'une antenne de champ électrique de type quart d'onde, ou encore de type modulation de fréquence ou d'amplitude de signal de puissance. Il est utile de préciser ici, qu'une antenne primaire fixée sur le véhicule en regard d'une antenne secondaire placée dans le pneumatique permet également, par effet d'inductance, une transmission de puissance de l'antenne primaire reliée par exemple à la batterie du véhicule à l'antenne secondaire de façon à fournir en énergie le capteur 5 de mesure. Une micro batterie insérée avec le capteur 5 dans un insert pré moulé de la bande de roulement 2 peut aussi assurer cette fonction.

Sur la figure 2, le signal correspondant aux mesures de contrainte est transmis, par les moyens 7, à l'unité 8 de traitement après réception par une antenne 9.

Par ailleurs, le fonctionnement du capteur 5 peut se faire via un circuit électronique de mesure de type CIAS (circuit électronique intégré à une application spécifique), un système d'alimentation tel que vu précédemment et un système de codage de la mesure, le tout avant la transmission des mesures constituant le signal à analyser. L'antenne 9 est reliée à un micro processeur 11 de l'unité de traitement 8 via un bus de jonction interne 10.

L'unité de traitement 8 comporte une mémoire programme 12. Le programme mémorisé permet, selon différentes sections de programmes, de traiter le signal jusqu'à l'obtention d'une information de détection d'un phénomène d'hydroplanage et d'évaluation de son intensité. Une fois l'information obtenue, via le bus de liaison 10, un affichage peut être provoqué sur un afficheur 13 placé à l'intérieur même du véhicule.

Cet afficheur 13 se présente sous la forme, par exemple, d'un cadran affichant une donnée relative et facilement interprétable. En effet, une donnée intrinsèque de l'hydroplanage ne peut être que faiblement significative pour le conducteur du véhicule. Il s'agit surtout pour le conducteur de prendre en compte l'hydroplanage afin de réguler en conséquence sa vitesse, en réduisant sa vitesse ou en adaptant son type de conduite, selon, par exemple, une conduite plus souple. L'information peut se présenter, par exemple, sous la forme d'une zone verte pour un hydroplanage évalué faible, d'une zone orange pour un hydroplanage important et dangereux pour la conduite et enfin d'une zone rouge pour un hydroplanage jugé critique.

La communication de la détection d'un phénomène d'hydroplanage et d'évaluation de son intensité peut également être transmise, en plus ou seulement, aux différents dispositifs 14 de sécurité active présents aujourd'hui sur un véhicule.

Ces dispositifs sont les dispositifs d'anti-blocage de roues (ABS) de correction de trajectoire (ESP) ou d'anti-patinage (ASR). Ces dispositifs 14 prennent en compte de façon instantanée et selon différents critères le comportement du pneumatique sur la chaussée. Il est donc intéressant pour ces derniers d'intégrer un critère supplémentaire tenant compte d'un phénomène d'hydroplanage.

Ces différents dispositifs de sécurité active 14 pourront ainsi améliorer leur sensibilité en tenant compte d'une hauteur d'eau $h_e$ présente devant et/ou sous le pneumatique.

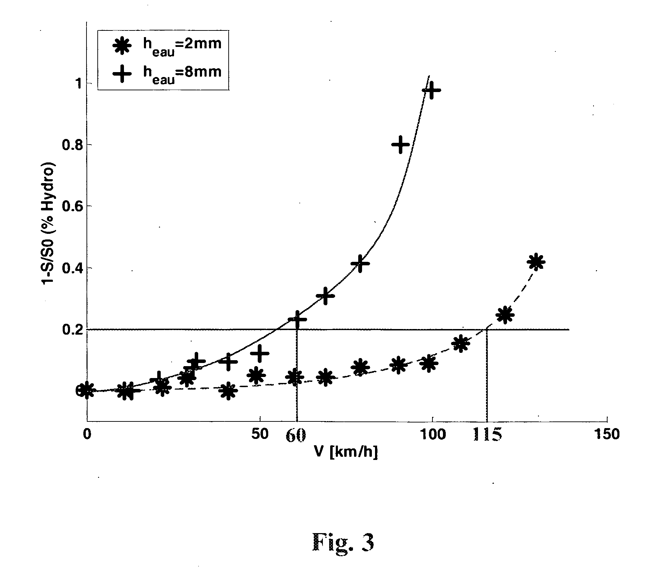

A la figure 3 est représenté l'évolution de la grandeur $1 - S/S_0$ caractérisant la phénoménologie de l'hydroplanage en fonction de la vitesse V de roulage d'un pneumatique et pour deux hauteurs d'eau, respectivement de 2 et 8 mm.

La surface $S$ du rapport détermine une surface instantanée d'aire de contact direct de la bande de roulement du pneumatique, mesurée sur le sol mouillé. L'aire de contact direct correspond à une aire dont le contact entre le matériau composant le sol de la route et le matériau composant la bande de roulement du pneumatique est sans intermédiaire c'est à dire sans qu'il puisse y avoir un film d'eau entre le sol et la partie de la bande de roulement du pneumatique en roulage sur ce sol.

Ainsi, sur une chaussée présentant une hauteur d'eau, cette aire de contact direct se réduit d'autant du fait d'un début de formation d'un film d'eau caractérisant le début du phénomène d'hydroplanage.

La seconde surface $S_0$ détermine l'aire de contact direct de la bande de roulement du pneumatique sur un sol sec de la même chaussée ou détermine l'aire du contact de la bande de roulement du pneumatique sur un sol mouillé mais pour une faible vitesse du véhicule.

En effet, dans ce dernier cas, la faible vitesse du véhicule garantit non seulement une faible résistance de la hauteur d'eau présente devant le ou les pneumatiques du véhicule mais permet surtout aux motifs sur la bande de roulement du pneumatique agissant sur une durée plus longue d'évacuer l'eau entre le pneumatique et le sol et d'éviter ainsi la formation ou le début de formation d'un film d'eau.

La surface $S_0$ est donc la surface maximale de contact direct que le pneu va pouvoir développer sur le sol, quelles que soient la vitesse et la hauteur d'eau.

La grandeur $1 - S/S_0$ est donc nulle en l'absence de phénomène d'hydroplanage même avec une hauteur d'eau sur la chaussée mais alors pour de faibles vitesses comprises entre 0 et 20 Km/h environ et est égale à 1 lorsque le phénomène d'hydroplanage est total sous le pneumatique.

Cette figure 3 illustre la très forte influence de la vitesse et de la hauteur d'eau sur le phénomène d'hydroplanage. Pour une hauteur d'eau sur la chaussée de 2 mm (courbe en traits pointillés), le seuil de 20 % d'hydroplanage est atteint à une vitesse de 115 km/h alors que ce seuil est atteint dès 60 km/h pour une hauteur d'eau de 8 mm (courbe en traits pleins).

La phénoménologie de l'hydroplanage est ainsi correctement représentée et caractérisée par la grandeur $1 - S/S_0$.

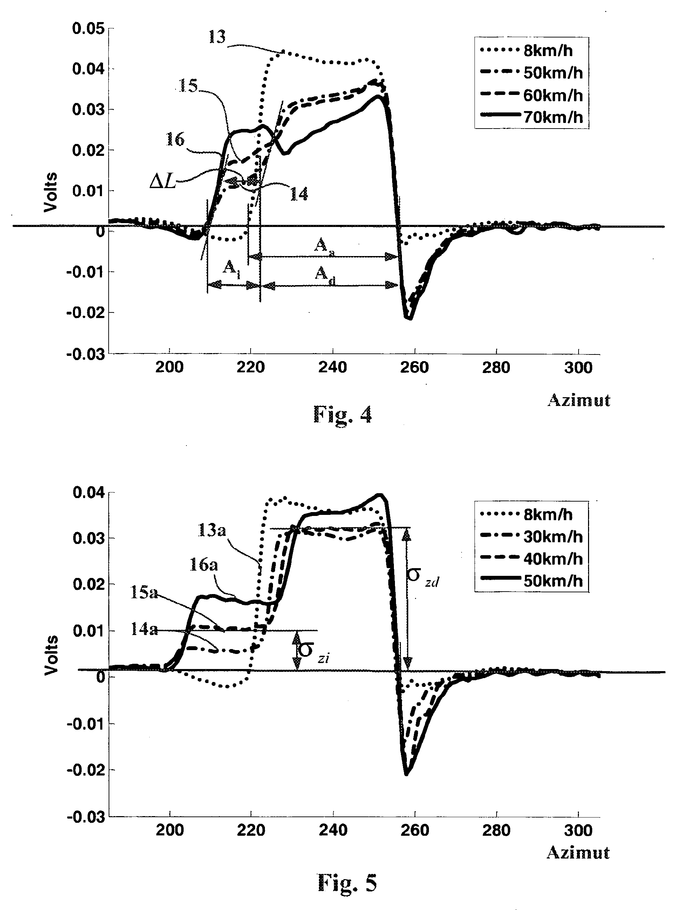

A la figure 4 sont représentées plusieurs courbes correspondant au signal obtenu par les mesures de contraintes normales en fonction du roulage de la bande de roulement 2 du pneumatique 1 sur le sol correspondant à la chaussée. Ces différentes courbes correspondent à différentes vitesses de roulage du pneumatique. En ordonnée, l'échelle est arbitraire et correspond aux valeurs données par le capteur de mesure en volts. En abscisse, les positions des points de mesure dans l'aire de contact sont données à partir du numéro d'ordre des mesures concernées. L'échantillonnage est réalisé avec 512 mesures par tour. Ces numéros d'ordre sont directement reliés à l'azimut du point de mesure.

Ainsi, le déploiement linéaire d'une circonférence totale, à savoir un tour complet du pneumatique étudié sur la chaussée correspond en abscisse, dans l'exemple considéré, à 512 points de mesure.

A la figure 4, on voit que les signaux de mesure ont une amplitude quasiment nulle au début et à la fin des signaux, en faisant abstraction d'un faible offset. Pour simplifier, dans ce cas de mesures de contraintes normales au sol, on appelle « aire de contact apparente » la portion des signaux de mesure dans laquelle l'amplitude de ces signaux est positive. Une valeur positive des signaux de mesure correspond à une compression du pain de gomme 3, et une valeur négative correspond à une extension du pain de gomme.

A la figure 4, le signal a été obtenu expérimentalement pour une hauteur d'eau prédéterminée sur la chaussée de 2 mm. Les contraintes mesurées, sont celles correspondant à des contraintes de compression subies par la bande de roulement 2 du pneumatique 1 et plus précisément par un capteur 5 de la bande de roulement lors de son passage dans l'aire de contact avec le plan de la chaussée et ce, selon une direction normale au plan de la chaussée.

La courbe 13 de la figure 4 représente un signal correspondant à des mesures de contraintes pour une faible vitesse de roulage du pneumatique, à savoir 8 km/h. A cette faible vitesse, la présence d'une hauteur d'eau sur la chaussée n'a pas de conséquence sur le signal de contrainte normale et le signal détecté à cette vitesse correspond à celui qu'on peut retrouver sur une route complètement sèche. Ainsi, lorsque le ou les capteurs de contrainte se trouvent en dehors de l'aire de contact direct de la bande de roulement avec le sol de la chaussée, les contraintes mesurées sont sensiblement nulles. La partie de la courbe correspondant aux mesures de contraintes négatives correspond à une section de la bande de roulement quittant la zone d'écrasement sur le sol et reprenant la courbure naturelle du pneumatique.

Avec la définition précédente, on peut estimer la longueur de l'aire de contact apparente $A_a$, qui dans ce cas est aussi l'aire de contact direct $A_d$, par la portion de la courbe 13 indiquée $A_a$.

Les courbes 14, 15 et 16 ont été obtenues expérimentalement pour la même hauteur d'eau de 2 mm aux vitesses respectivement de 50, 60 et 70 km/h. Ces courbes ont une allure sensiblement différente de celle de la courbe 13. En ayant recalée toutes les courbes au point où, à l'arrière de l'aire de contact, la contrainte repasse par zéro, on constate que l'aire de contact apparente $A_a$ est sensiblement allongée au début de l'aire de contact. On voit apparaître un premier plateau dont la hauteur augmente avec la vitesse, on peut estimer que la longueur de ce premier plateau ou valeur momentanée $\Delta L$ correspond à la longueur de la zone de contact indirect $A_i$ c'est-à-dire la zone dans laquelle un film d'eau se trouve entre la bande de roulement et le sol. On voit aussi que la longueur de la zone de contact direct $A_d$ est sensiblement diminuée relativement à celle de la courbe 13.

Pour pouvoir estimer la longueur de l'aire de contact indirect $A_i$, le procédé selon l'invention propose de déterminer la valeur momentanée $\Delta L$. La figure 4 illustre un procédé de détermination de $\Delta L$ dans lequel on détermine le décalage entre les deux fronts de montés successifs liés au premier puis au second plateau. Ce décalage illustré dans le cas de la courbe 14 a une valeur qui ne varie pratiquement pas avec la vitesse dans une large gamme de vitesse. On voit aussi que la courbe 16, obtenue à une vitesse de 70 km/h présente une allure difficile à interpréter dans laquelle les deux plateaux semblent avoir une hauteur voisine, cela indique que le phénomène d'hydroplanage devient très marqué.

Ainsi l'allongement de l'aire de contact $\Delta L$ ne dépend pratiquement pas de la vitesse de roulage du pneumatique. La présence du premier plateau sur le signal étudié et ce, dès le roulage du pneumatique à une vitesse, par exemple de 40 km/h, a pour source l'apparition de nouvelles contraintes.

Ces nouvelles contraintes ont pour origine une hauteur d'eau présente juste devant le pneu sur toute sa largeur, selon l'axe Y de la bande de roulement 2. Cette hauteur d'eau a pour effet ainsi d'établir un contact intermédiaire entre le sol de la chaussée et la bande de roulement 2 du pneumatique et ce avant le contact direct d'un capteur avec le sol de la chaussée.

La contrainte s'établit donc toujours entre le sol et la bande de roulement 2 du pneumatique mais via l'élément liquide constituant la hauteur d'eau. Le premier plateau obtenu sur le signal est donc celui d'un capteur détectant une contrainte sur le sol via l'élément liquide correspondant à cette hauteur d'eau. Ce signal représente donc la résistance opposée par l'eau au pain du pneu (pression hydrostatique), qui dépend de la vitesse de roulage selon $P \approx \dfrac{1}{2} \rho V^2$ ($\rho$ : masse volumique, V : vitesse de roulage). La hauteur d'eau présente à faible vitesse n'a pas pour effet de présenter un même premier plateau sur le signal mesuré car l'entrée du capteur dans le volume d'eau correspondant exige une vitesse suffisante afin de créer une tension ou une résistance suffisante de la part de l'élément liquide et par conséquent une contrainte significative.

A la figure 5, on retrouve en ordonnée et en abscisse les mêmes paramètres décrits pour la figure 4, on retrouve également les courbes respectivement 13a, 14a, 15a et 16a correspondant aux vitesses de 8, 30, 40 et 50 km/h de roulage du pneumatique mais pour une hauteur d'eau sur la chaussée de 8 mm.

A faible vitesse (8 km/h) la courbe 13a est très sensiblement identique à la courbe 13 obtenue pour une hauteur d'eau de 2 mm. Pour des vitesses significatives du véhicule, en l'occurrence 30, 40 et 50 km/h, on constate à nouveau l'apparition de l'allongement de l'aire de contact $\Delta L$ sur la chaussée. Ces résultats sont obtenus pour un pneu utilisé, strictement identique à celui ayant servi pour les résultats de la figure 4, en l'occurrence un pneumatique Michelin Energy 195/65R15 XH1.

Dans ce dernier cas, l'allongement $\Delta L$ de l'aire de contact est supérieur à celui obtenu pour une hauteur d'eau inférieure à 2 mm. Dans ce cas également, on constate qu'à nouveau cet allongement $\Delta L$, obtenu pour une hauteur d'eau de 8 mm, ne dépend pas, une fois détecté grâce à une vitesse suffisante, de la vitesse de roulage du pneumatique.

Sa longueur est en revanche plus importante car la hauteur d'eau présente de façon frontale devant la largeur de la bande de roulement du pneumatique est plus importante.

Ainsi, le contact établi par la présence de ce milieu liquide entre la bande de roulement du pneumatique et le sol de la chaussée s'établit plus haut sur le pneu donc plus tôt. Le capteur entre plus tôt dans la partie correspondant à l'aire de contact indirect (car se faisant par l'intermédiaire d'un film d'eau) apparent entre le sol et la bande roulement 2 du pneumatique 1. La partie du signal correspondant à l'allongement ΔL de l'aire de contact est donc plus importante.

Puis, à partir d'un indice de mesure proche de 225, le contact est à nouveau direct entre le sol et la bande de roulement, on retrouve un signal de contraintes pour les courbes 14a, 15a et 16a, sensiblement identique à celui obtenue pour les courbes 14, 15 et 16, de la figure 4.

Le passage d'un capteur de la bande de roulement dans l'aire de contact sur le sol de la chaussée présente donc deux parties : une première partie correspondant à un contact du capteur avec le sol de la chaussée, mais par l'intermédiaire d'un élément liquide correspondant à la hauteur d'eau que l'on souhaite estimer ($A_i$) et une seconde partie correspondant à un contact direct du capteur avec le sol de la chaussée ($A_d$).

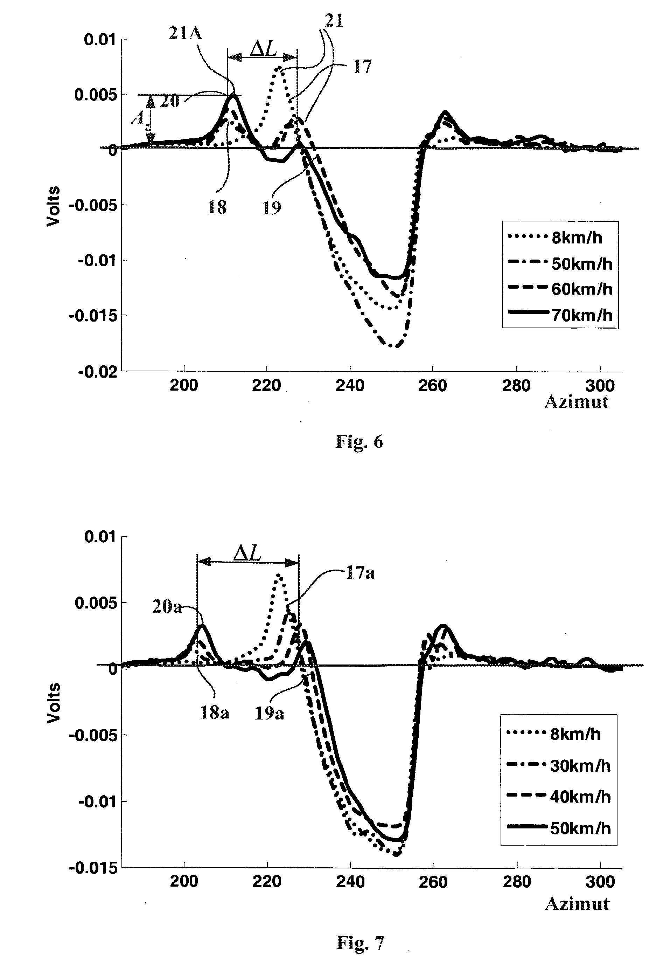

Sur la figure 6, les courbes 17, 18, 19 et 20 sont obtenues pour des vitesses respectivement de 8, 50, 60 et 70 km/h du pneumatique sur le sol. Ces courbes représentent, en ordonnées, des contraintes de cisaillement selon l'axe X de la bande de roulement c'est-à-dire selon le sens circonférentiel de roulage du pneumatique sur le sol, en abscisse, des points de mesure tout le long de la bande de roulement. Seule une partie de la bande de roulement est ici représentée et correspond aux mesures significatives.

Toujours à faible vitesse, en l'occurrence 8 km/h, le signal de contraintes obtenu respectivement sur la courbe 17 est similaire ou sensiblement similaire à celui obtenu pour une route sèche ou humide, mais ne présentant pas de hauteur d'eau. Au moment du contact du pain de mesure 3, dans lequel se trouve le capteur de contrainte, avec le sol, les contraintes de cisaillement relevées deviennent positives ou motrices (orientées dans le sens du roulage), passent par un maximum 21, puis, durant la suite de la présence du capteur dans l'aire de contact sur le sol, les contraintes de cisaillement évoluent vers des valeurs négatives ou freineuses, opposées au sens du roulage du pneumatique. Enfin, en sortie de l'aire de contact, les contraintes subies par la bande de roulement 2 sont à nouveau sensiblement nulles. Ce « signal en S » correspond à la mécanique classique de contact au sol de la bande de roulement d'un bandage pneumatique, bien connue de l'homme de l'art.

Pour des vitesses significatives de 50, 60 et 70 km/h correspondant aux courbes respectives 18, 19 et 20 apparaît encore le pic 21 correspondant au même phénomène physique ainsi qu'un pic 21A, dit pic anticipé, détecté avant le pic 21. Ce premier pic anticipé 21A, de contrainte positive, est d'autant plus important que la vitesse est importante. Pour des raisons similaires à celles évoquées précédemment pour les figures 4 et 5, l'apparition de ce premier pic 21A provient du fait de la rentrée, à une vitesse suffisamment rapide, d'un capteur de contraintes longitudinales dans la hauteur d'eau présente entre la bande de roulement 2 du pneumatique et le sol. 1.

Or, lorsque l'on mesure la distance ΔL entre les deux pics 21A et 21 d'une même courbe, cette distance ΔL est sensiblement identique pour toutes les courbes étudiées, respectivement 18, 19 et 20. Cette valeur ΔL est alors, comme pour l'étude des contraintes de pression, indépendante de la vitesse de roulage du pneumatique.

Ainsi la valeur momentanée choisie et représentative de l'allongement de l'aire de contact pour les deux types de contraintes (compression et cisaillement) est la même : ΔL.

Sur les courbes de la figure 7, 17a, 18a, 19a et 20a respectivement étudiées pour des vitesses de 8, 30, 40 et 50 km/h et pour une hauteur d'eau plus importante de 8 mm, cette valeur momentanée de la distance ΔL entre les deux premiers pics distingués à partir d'une vitesse de 30 km/h est plus importante. Cette valeur momentanée reste néanmoins constante pour toutes les vitesses étudiées à cette même hauteur d'eau.

La raison de l'allongement de la distance ΔL entre les deux pics de contrainte longitudinale est la même que celle évoquée précédemment pour les figures 4 et 5. Une entrée plus haute et donc plus précoce du capteur dans une aire de contact s'établit entre le pneumatique et le sol, via le milieu liquide.

La première partie de l'aire de contact établie entre le capteur de contrainte longitudinale et le sol, par l'intermédiaire du milieu liquide correspondant à la hauteur d'eau, est d'autant plus mesurable que la vitesse du pneumatique est suffisamment importante. Il est en effet nécessaire qu'une tension ou une pression suffisante soit présente grâce à la vitesse entre le pneumatique et la chaussée sur le volume d'eau concerné.

Ainsi, pour les quatre courbes étudiées des figures 4 à 7, l'aire totale de contact correspondant aux contacts à la fois directs et indirects entre le sol et la bande de roulement 2, apparaît pour des valeurs de contrainte de pression ou de cisaillement significatives. En effet, les valeurs affichées en dehors de cette aire totale de contact, via le milieu liquide ou directement sur le sol de la chaussée, sont sensiblement nulles.

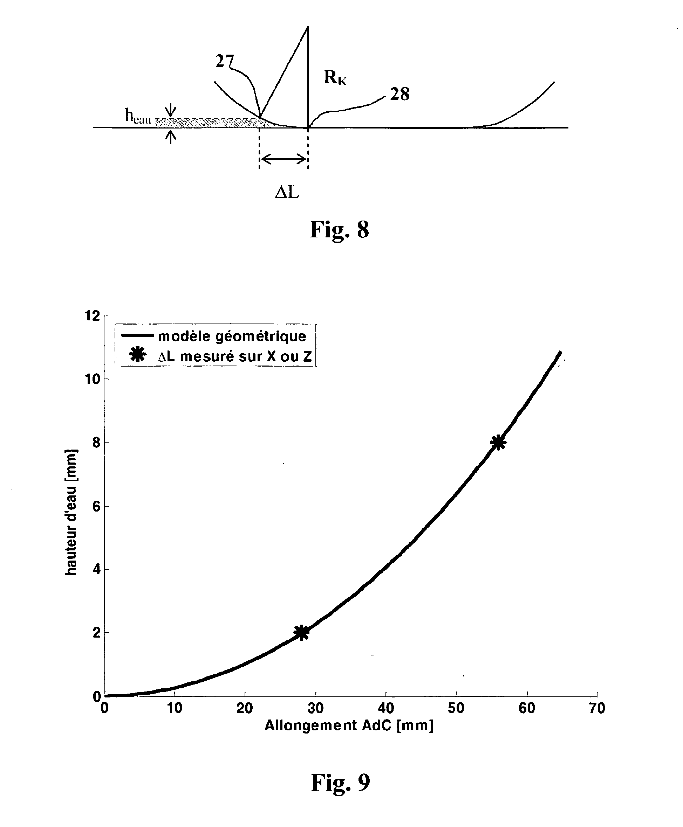

A la figure 8 est représenté un pneumatique avec son écrasement localisé sur la chaussée ainsi qu'une présence d'eau en avant du pneumatique.

Cette présence d'eau est définie selon une hauteur d'eau $h_e$ et détermine le long de la circonférence du pneumatique deux points. Un premier point 27 où l'eau entre en contact avec le pneumatique mais où le bord du pneumatique comportant les capteurs de contraintes ne se trouve pas encore en contact avec le sol de la chaussée, un second point 28, où l'eau tangente à la fois le sol et le pneumatique mais où la bande de roulement 2 de ce dernier prend contact avec le sol.

Entre ces deux points, la courbure du pneumatique épouse un rayon bien connu de l'homme du métier appelé rayon de raccordement de Koutny $R_k$, sensiblement différent du rayon du pneumatique mais prenant en compte le phénomène d'écrasement du pneumatique au contact de la chaussée impliquant un rayon de courbure différent en entrée et en sortie de l'aire de contact relativement au rayon de courbure dans la partie haute du pneumatique.

Selon une projection orthogonale du point 27 sur le sol représentant la chaussée, on détermine alors entre cette projection et le point 28 une distance au sol correspondant à l'allongement $\Delta L$ de l'aire de contact.

Cet allongement $\Delta L$ de l'aire de contact de la bande de roulement avec le sol correspond sensiblement à celui mesuré par les capteurs 5, via le milieu liquide et pour des vitesses suffisamment rapides.

Ce modèle géométrique permet d'établir une relation trigonométrique entre $\Delta L$ et $h_e$ selon la formule :

$$\Delta L = R_k \, \sin\left\{ \arccos\left( 1 - \frac{h_c}{R_k} \right) \right\}$$

ou encore :

$$h_c = K\left\{ 1 - \cos(\arcsin\frac{\Delta L}{K}) \right\}$$

Un programme de calcul de la mémoire 11 de l'unité 8 de traitement, détermine, à partir de cette formule et à partir de la connaissance de la valeur momentanée $\Delta L$, une estimation de la hauteur d'eau $h_e$.

La figure 9 représente l'adéquation entre la hauteur d'eau obtenue par la formule théorique ci-dessus à partir de la connaissance de la valeur momentanée $\Delta L$ (connaissance issue des contraintes mesurées à partir de la méthode décrite) et les cas réellement mesurés, où la hauteur d'eau vaut réellement 2 ou 8 mm. On constate qu'il est tout à fait raisonnable de modéliser l'estimation de $h_e$ à partir de $\Delta L$ par la formule trigonométrique évoquée, puisque $\Delta L$ et $h_e$ la respectent bien dans les cas des mesures réelles analytiques décrites.

Après avoir vu comment utiliser les courbes expérimentales pour estimer la hauteur d'eau présente sur la chaussée, ce qui suit explicite les traitements des mêmes courbes pour déterminer les valeurs momentanées ou critères retenus pour caractériser l'intensité du phénomène d'hydroplanage.

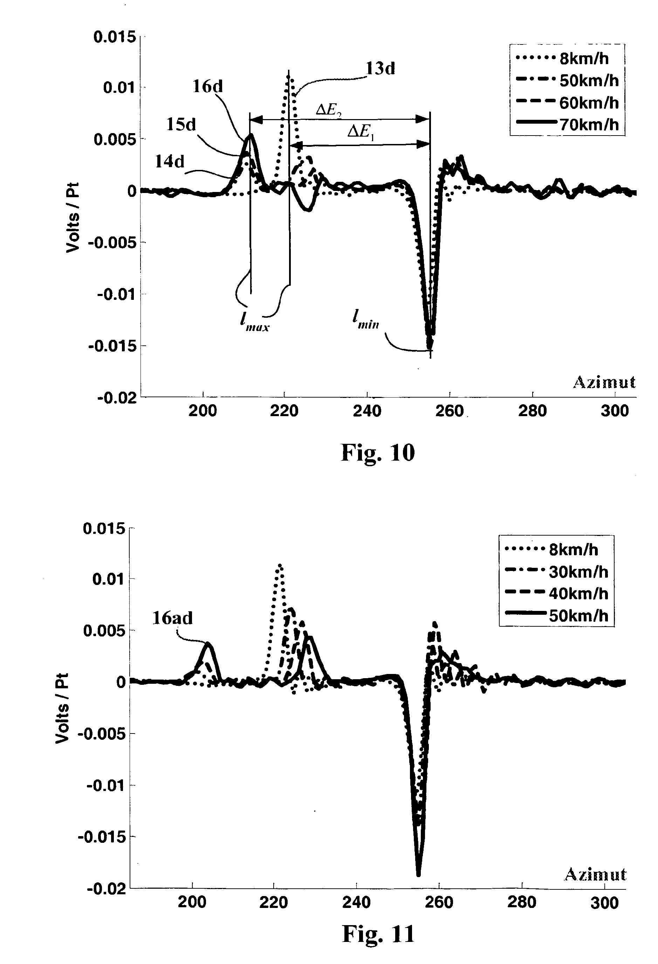

La figure 10 illustre le calcul d'une première valeur momentanée ou critère $\Delta E$ utilisé pour détecter l'apparition d'un phénomène d'hydroplanage selon l'invention.

Cette figure présente les courbes 13d à 16d représentant respectivement la dérivée première des mesures de contraintes de compression selon la valeur x du déplacement d'un capteur dans la direction longitudinale X de roulement du pneumatique. Les courbes 13d à 16d correspondent aux dérivées des courbes 13 à 16 illustrées à la figure 4.

Pour les quatre courbes, les minimums respectifs des dérivés de mesures de contraintes sont obtenus pour l'indice de mesure 255, c'est-à-dire en sortie de l'aire de contact. Les maximums sont obtenus lors des phases respectives d'apparition des plateaux de mesures constantes des contraintes. On obtient ainsi pour les faibles vitesses correspondant à la courbe 13d un maximum dès l'apparition du seul et unique plateau. La valeur du premier critère est alors $\Delta E_1$. Pour une vitesse supérieure de 50 km/h, courbe 14d, on observe deux pics positifs à l'entrée de l'aire de contact correspondant aux deux fronts successifs des premier et second plateaux. Pour la courbe 14d, le pic d'amplitude maximum est le second et la valeur de $\Delta E$ est calculée en utilisant ce second pic. La valeur correspondante du critère est légèrement inférieure à la valeur initiale de $\Delta E_1$. Il n'y a pas encore eu de saut.

En revanche, pour les courbes 15d et 16d, obtenues aux vitesses de 60 et 70 km/h, les pics positifs d'amplitude maximum sont les premiers. En conséquence, le saut de valeur du premier critère a eu lieu.

La valeur momentanée $\Delta E$ a pour expression : $\Delta E = I_{min} - I_{max}$ avec $I_{min}$ correspondant à la position ou l'azimut de $\left( \dfrac{d\sigma_z}{dx} \right)_{min}$, et $I_{max}$ correspondant à la position ou l'azimut de $\left( \dfrac{d\sigma_z}{dx} \right)_{max}$.

Dans le cas de la courbe 13a, à faible vitesse, le premier critère a une valeur $\Delta E_1$ et dans le cas de la courbe 16d, obtenue à une vitesse de 50 km/h, une valeur $\Delta E_2$. La valeur $\Delta E_2$ est très notablement supérieure à $\Delta E_1$.

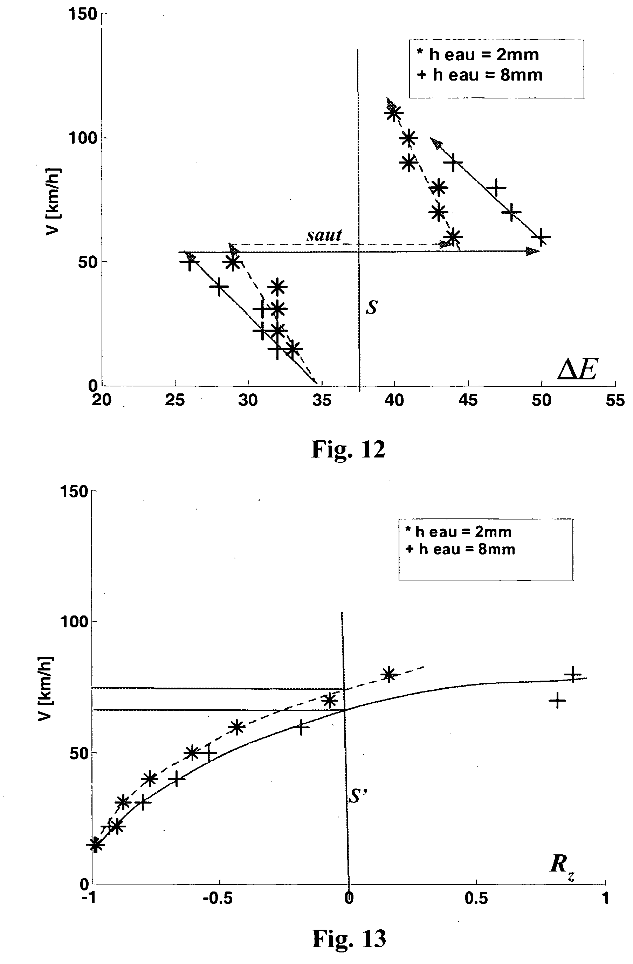

Cette différence très marquée illustrée aussi à la figure 12 montre tout l'intérêt de ce premier critère pour détecter l'apparition d'un phénomène d'hydroplanage. Dès que la valeur du critère ou valeur momentanée devient supérieure à une fourchette comprise entre 35-40, cela veut dire que le saut a eu lieu. Ce saut est lié à l'évolution d'un plateau anticipé ou premier plateau lié à l'apparition d'une aire de contact indirect, c'est-à-dire d'un film d'eau sensible à l'avant du pneumatique. Dès que ce saut est détecté, il convient de faire parvenir au conducteur une alerte de risque d'hydroplanage. Les flèches montrent l'influence de la vitesse pour l'évolution du critère.

La figure 5 illustre le calcul du second critère ou valeur momentanée $R_z$. Ce critère correspond à :

$$R_{z} = \frac{\sigma_{zi} - \sigma_{zd}}{\sigma_{zd}}$$

dans lequel $\sigma_{zi}$ représente l'amplitude des contraintes de compression du premier plateau, et $\sigma_{zd}$ représente l'amplitude des contraintes de compression du second plateau. Bien entendu dans le cas de la courbe 13a, la valeur du critère est -1 puisqu'il n'y a qu'un seul plateau.

La figure 13 présente l'évolution de ce second critère en fonction de la vitesse. On voit que sa valeur passe progressivement de -1 à zéro puis devient positive. Le passage par zéro correspond au moment où les contraintes de compression des premier et second plateaux deviennent similaires ce qui veut dire que le phénomène d'hydroplanage devient très marqué. Il est alors indispensable d'avertir immédiatement le conducteur de ce risque. On peut choisir comme valeur seuil ce passage par zéro ou une valeur inférieure si on le souhaite. La figure 13 illustre aussi l'évolution de ce second critère pour les deux hauteurs d'eau 2 et 8 mm. Sans surprise, on constate que plus la vitesse augmente plus l'influence de la hauteur d'eau est nette. On note aussi qu'au-delà de la valeur nulle du critère, l'influence de la vitesse est très marquée. Une faible variation de vitesse de roulage peut entraîner de très fortes variations dans le phénomène d'hydroplanage.

La figure 6 illustre le principe de la détermination du troisième critère $A_{x}$. Les courbes de cette figure représentent, en ordonnées, des contraintes de cisaillement selon l'axe X de la bande de roulement pour une hauteur d'eau de deux mm. Ce critère correspond à l'amplitude du pic anticipé 21A. Cette amplitude augmente progressivement avec la vitesse.

La connaissance de la hauteur d'eau et de la vitesse du véhicule permettrait déjà d'avoir une première estimation de l'intensité du phénomène d'hydroplanage d'un pneumatique. Mais comme cela a déjà été indiqué, cette estimation serait assez grossière car le phénomène d'hydroplanage varie fortement en fonction de la nature de la chaussée ainsi que de l'usure des pneumatiques.

L'estimation de la hauteur d'eau selon l'invention est relativement insensible à l'usure des pneumatiques. En revanche, les secondes valeurs momentanées $A_{x}$, $\Delta E$ et $R_{z}$ ont l'avantage d'être très sensibles aux variations de nature de chaussée et à l'usure des pneumatiques. En conséquence, les abaques degré d'hydroplanage en fonction de ces critères sont elles très peu sensibles à ces variations. Ces abaques sont valables dans des conditions très larges et c'est un avantage majeur de l'invention.

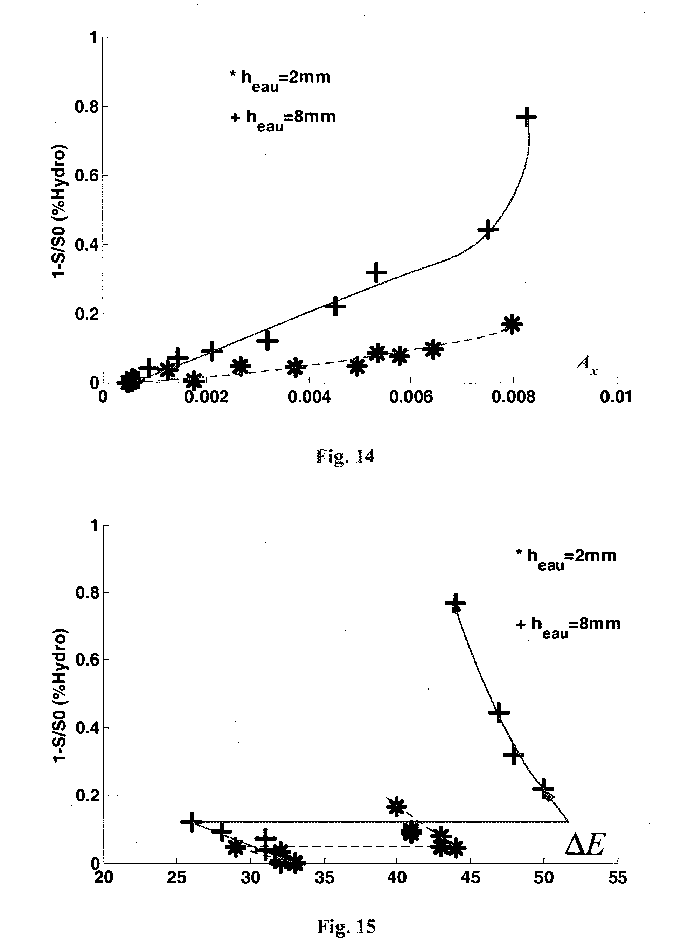

Les figures 14, 15 et 16 présentent les abaques degré d'hydroplanage en fonction respectivement des critères $A_{x}$, $\Delta E$ et $R_{z}$.

La forme exacte de ces abaques est variable selon le critère retenu.

La figure 14 présente $1 - S/S_{0}$ en fonction de $A_{x}$. L'évolution est progressive et similaire à celle du degré d'hydroplanage en fonction de la vitesse (fig. 3).

La figure 15 présente $1 - S/S_{0}$ en fonction de $\Delta E$. La forme des courbes de l'abaque est proche d'une succession de Z inclinés pour chaque hauteur d'eau. Comme les courbes ne sont pas biunivoques, il est souhaitable d'enregistrer l'historique des valeurs calculées, au moins les mesures concernant les 4 à 5 derniers tours de roue pour pouvoir interpréter correctement les valeurs obtenues et donner une estimation fiable du degré d'hydroplanage.

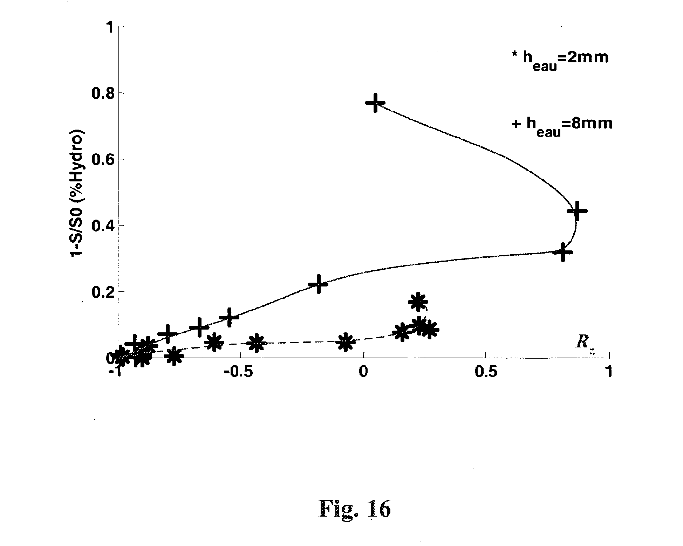

La figure 16 présente $1 - S/S_{0}$ en fonction de $R_{z}$. La forme des courbes est elle aussi non biunivoque et comme précédemment il est souhaitable de conserver en mémoire une partie de l'historique pour donner une estimation fiable du degré d'hydroplanage.

Il est utile de ne pas mesurer une seule valeur momentanée ou critère pour rendre plus robuste et fiabiliser les estimations du degré d'hydroplanage.

En revenant à la figure 2 du dispositif de l'invention, un sous programme 23 de la mémoire programme 12 de l'unité de traitement 8 permet d'extraire une partie du signal reçu par les capteurs correspondant à un signal de contrainte sensiblement non nul, par exemple typiquement supérieur à un seuil.

Ainsi, l'extraction de la partie du signal, pour des contraintes de compression et de cisaillement, correspondant au passage d'un ou plusieurs capteurs dans l'aire de contact de la bande de roulement 2 consiste à extraire le signal lorsque le (ou les) capteur émet un signal significatif de mesure de contrainte, la durée de cette portion du signal correspond à la durée du passage du capteur dans l'aire de contact apparente.

A l'aide d'un sous-programme 26, un traitement des données est effectué pour obtenir le calcul des valeurs et critères $\Delta L$, $\Delta E$ $A_{x}$, et $R_{z}$. Une comparaison (étape 25) est alors effectuée avec des données et seuils enregistrés dans la zone de donnée 24.

Les sous-programmes 29 et 30 estiment alors à l'aide d'abaques la hauteur d'eau et le degré d'hydroplanage. Des alertes complémentaires peuvent être déclenchées lorsque les critères dépassent des seuils donnés indiquant un risque d'hydroplanage.

L'estimation de $1 - S/S_{0}$ est alors affichée sur le cadran 13 indifféremment de façon analogique ou numérique et selon, par exemple, un code de couleur graduel tel que vert, orange ou rouge permettant pour le conducteur d'évaluer immédiatement la dangerosité du phénomène d'hydroplanage. De la même façon, cette grandeur $1 - S/S_0$ est communiquée aux différents dispositifs 14 de sécurité active disponible à bord du véhicule et permettant d'éventuellement d'affiner les résultats des programmes de calculs respectif de ces dispositifs.

L'invention n'est pas limitée aux exemples décrits et représentés et diverses modifications peuvent y être apportées sans sortir de son cadre défini par les revendications annexées.

## Revendications

1. Procédé de détection et d'estimation de l'intensité d'un phénomène d'hydroplanage d'un pneumatique d'un véhicule évoluant sur un sol mouillé d'une chaussée, la bande de roulement du pneumatique étant équipée d'un ou plusieurs capteurs (5) permettant chacun de mesurer une grandeur caractéristique des sollicitations que subit localement la bande de roulement lorsque le pneumatique roule sur le sol, **caractérisé en ce qu'**il comporte les étapes suivantes :

   - mesurer ladite grandeur caractéristique lorsque le pneumatique roule sur le sol ;
   - produire un signal correspondant à ces mesures ;
   - extraire de ce signal une portion relative au passage du ou des capteurs dans l'aire de contact apparente du pneumatique sur le sol ;
   - déduire de cette portion du signal une première valeur momentanée ($\Delta L$) reliée à la longueur de la zone de contact indirect de l'aire de contact apparente de la bande de roulement du pneumatique sur le sol et une seconde valeur momentanée ($\Delta E$, $R_z$, $A_x$) reliée à l'intensité du phénomène d'hydroplanage dans la zone de contact indirect relativement au reste de l'aire de contact apparente ;
   - estimer la hauteur d'eau ($h_e$) à partir d'un calcul prenant en compte la première valeur momentanée déduite ($\Delta L$) ;
   - estimer l'intensité du phénomène d'hydroplanage à partir de l'estimation de la hauteur d'eau ($h_c$) et de la seconde valeur momentanée ($\Delta E$, $R_z$, $A_x$).

2. Procédé selon la revendication 1, dans lequel la grandeur mesurée par le capteur (5) est caractéristique des contraintes de compression subies par la bande de roulement du pneumatique dans une direction normale au plan de la chaussée.

3. Procédé selon la revendication 2, dans lequel l'étape de déduction d'une première valeur momentanée ($\Delta L$) correspond à :

   - lorsque la portion comprend deux plateaux successifs, la valeur momentanée ($\Delta L$) est la mesure de la longueur du premier plateau, du côté de l'entrée de l'aire de contact apparente ;
   - lorsque la portion comprend un seul plateau, la valeur momentanée est zéro.

4. Procédé selon l'une des revendications 2 et 3, dans lequel l'étape de déduction d'une seconde valeur momentanée ($\Delta E$) correspond à :

   - dériver le signal ;

   - déterminer les valeurs minimale $\left(\dfrac{d\sigma_z}{dx}\right)_{min}$ et maximale $\left(\dfrac{d\sigma_z}{dx}\right)_{max}$ du signal dérivé ainsi que leur position ($l_{min}$, $l_{max}$); et
   - calculer la valeur momentanée ($\Delta E$) correspondant à l'écart de position entre les valeurs minimale et maximale du signal dérivé :

$$\Delta E = l_{max} - l_{min}$$

5. Procédé selon la revendication 4, dans lequel on déclenche une alarme lorsque la seconde valeur momentanée est supérieure à un seuil donné.

6. Procédé selon l'une des revendications 2 à 4, dans lequel l'étape de déduction d'une seconde valeur momentanée ($R_z$) correspond à :

   - lorsque la portion du signal comprend deux plateaux successifs, la valeur momentanée ($R_z$) est égale à :

$$R_z = \frac{\sigma_{zi} - \sigma_{zd}}{\sigma_{zd}}$$

   dans lequel $\sigma_{zi}$ représente l'amplitude des contraintes de compression du premier plateau, et $\sigma_{zd}$ représente l'amplitude des contraintes de compression du second plateau ; et

   - lorsque la portion comprend un seul plateau, la valeur momentanée ($R_z$) est égale à -1.

7. Procédé selon la revendication 6, dans lequel une alarme est déclenchée lorsque la valeur momentanée ($R_z$) est supérieure à une valeur donnée.

8. Procédé selon la revendication 7, dans lequel une alarme est déclenchée lorsque la valeur momentanée ($R_z$) est positive.

9. Procédé selon la revendication 1, dans lequel la grandeur mesurée par le capteur (5) est caractéristique des contraintes de cisaillement longitudinal subies par la bande de roulement du pneumatique.

10. Procédé selon la revendication 9, dans lequel l'étape de déduction d'une première valeur momentanée ($\Delta L$) correspond à :

   - lorsque la portion comprend, du côté de l'entrée de l'aire de contact, deux pics positifs successifs, la valeur momentanée est la mesure de la longueur ($\Delta L$) séparant les maxima des deux pics ;
   - lorsque la portion comprend un seul pic positif, la valeur momentanée ($\Delta L$) est zéro.

11. Procédé selon l'une des revendications 9 et 10, dans lequel l'étape de déduction d'une seconde valeur momentanée ($A_x$) correspond à :

   - lorsque la portion comprend, du côté de l'entrée de l'aire de contact apparente, deux pics positifs successifs, la valeur momentanée ($A_x$) est la mesure de l'amplitude du premier pic positif ;
   - lorsque la portion comprend un seul pic positif, la valeur momentanée ($A_x$) est zéro.

12. Procédé selon l'une quelconque des revendications 1 à 10, dans lequel le capteur (5) mesure à la fois une grandeur caractéristique des contraintes de compression normale et une grandeur caractéristique des contraintes de cisaillement longitudinal subies par la bande de roulement du pneumatique.

13. Procédé selon l'une quelconque des revendications 1 à 12, dans lequel la hauteur d'eau ($h_c$) est déduite de la valeur momentanée ($\Delta L$) en utilisant un abaque.

14. Procédé selon l'une quelconque des revendications 1 à 12, dans lequel la hauteur d'eau ($h_c$) est déduite en utilisant l'équation suivante :

$$h_e = K\left\{1 - \cos(\arcsin\frac{\Delta L}{K})\right\}$$

avec $h_c$ hauteur d'eau estimée, $\Delta L$ la valeur momentanée et $K$ une valeur constante liée au pneumatique.

15. Procédé selon la revendication 14, dans lequel le facteur $K$ est le petit rayon de raccordement de Koutny ($R_K$).

16. Procédé selon l'une des revendications 1 à 15, dans lequel on estime l'intensité du phénomène d'hydroplanage à partir de la grandeur $1 - S/S_0$ fonction de deux surfaces :

   - une première surface S déterminant une surface instantanée d'aire de contact direct de la bande de roulement du pneumatique mesurée sur un sol mouillé à la vitesse du véhicule ; et
   - une seconde surface So déterminant l'aire de contact direct idéale maximale de la bande de roulement du pneumatique sur le même sol sec et/ou pour une faible vitesse du véhicule garantissant l'absence d'un début d'hydroplanage.

17. Procédé selon la revendication 16, dans lequel on détermine la grandeur $1 - S/S_0$ caractérisant l'intensité du phénomène d'hydroplanage à partir :

   - de la connaissance d'au moins une seconde valeur momentanée ($\Delta E$, $Rz$, $A_x$) ;
   - d'un calcul estimé d'une hauteur d'eau ($h_e$) présente au sol ; et
   - d'un abaque expérimental représentant l'évolution de la grandeur $1 - S/S_0$ en fonction de la seconde valeur momentanée ($\Delta E$, $Rz$, $A_x$) et ce pour différentes hauteurs d'eau ($h_e$) prédéterminées.

18. Procédé selon l'une des revendications 16 ou 17, dans lequel on déclenche une alarme lorsque la grandeur $1 - S/S_0$ dépasse un seuil donné.

19. Dispositif de détection et d'estimation de l'intensité d'un phénomène d'hydroplanage d'un pneumatique d'un véhicule évoluant sur un sol mouillé d'un chaussée comportant :

   - un pneumatique dont une bande de roulement est équipée d'un ou plusieurs capteurs (5) permettant, chacun, de mesurer une grandeur caractéristique des sollicitations subies par la bande de roulement du pneumatique en roulage sur le sol,

- des moyens de transmission d'un signal correspondant aux mesures de cette grandeur caractéristique ; et
- une unité de traitement de signaux capable d'extraire du signal transmis, une portion de signal correspondant au nombre ou à la durée de passage du ou des capteurs dans l'aire de contact du pneumatique en roulage sur le sol ;

**caractérisé en ce qu'**il comporte, dans l'unité de traitement, un programme pour, à partir du signal extrait mettre en oeuvre le procédé selon l'une des revendications 1 à 18.

**Claims**

1. Method of detecting and estimating the intensity of hydroplaning of a tyre of a vehicle travelling on a wet road surface, the tread of the tyre being equipped with one or more sensors (5) each capable of measuring a characteristic quantity of the stresses that the tread undergoes locally when the tyre is rolling on the ground, **characterized in that** it comprises the following steps:

   - said characteristic quantity is measured when the tyre is rolling on the ground;
   - a signal corresponding to these measurements is produced;
   - a portion of this signal relating to the passing of the sensor or sensors into the apparent area of contact between the tyre and the ground is extracted;
   - a first instantaneous value ($\Delta L$), connected with the length of the indirect contact region of the apparent area of contact between the tyre tread and the ground, and a second instantaneous value ($\Delta E$, $R_z$, $A_x$), connected with the intensity of the hydroplaning in the region of indirect contact relative to the rest of the apparent area of contact, are deduced from this portion of the signal;
   - the water height ($h_w$) is estimated from a calculation taking into account the first instantaneous value ($\Delta L$) deduced; and
   - the intensity of the hydroplaning is estimated from the estimate of the water height ($h_w$) and from the second instantaneous value ($\Delta E$, $R_z$, $A_x$).

2. Method according to Claim 1, in which the quantity measured by the sensor (5) is characteristic of the compressive stresses undergone by the tyre tread in a direction normal to the plane of the road.

3. Method according to Claim 2, in which the step of deducing a first instantaneous value ($\Delta L$) is such that:

   - when the portion comprises two successive plateaus, the instantaneous value ($\Delta L$) is the measurement of the length of the first plateau, on the entry side of the apparent area of contact; and
   - when the portion comprises a single plateau, the instantaneous value is zero.

4. Method according to either of Claims 2 and 3, in which the step of deducing a second instantaneous value ($\Delta E$) corresponds to:

   - differentiating the signal;

   - determining the minimum value $\left(\dfrac{d\sigma_z}{dx}\right)_{\min}$ and the maximum value $\left(\dfrac{d\sigma_z}{dx}\right)_{\max}$ of the differentiated signal and also their position ($l_{min}$, $l_{max}$); and
   - calculating the instantaneous value ($\Delta E$) corresponding to the difference in position between the minimum and maximum values of the differentiated signal: $\Delta E = l_{max} - l_{min}$.

5. Method according to Claim 4, in which an alarm is triggered when the second instantaneous value is above a given threshold.

6. Method according to one of Claims 2 to 4, in which the step of deducing a second instantaneous value ($R_z$) is such that:

   - when the signal portion comprises two successive plateaus, the instantaneous value ($R_z$) is equal to:

$$R_z = \frac{\sigma_{zi} - \sigma_{zd}}{\sigma_{zd}}$$

   in which $\sigma_{zi}$ represents the amplitude of the compressive stresses of the first plateau and $\sigma_{zd}$ represents the amplitude of the compressive stresses of the second plateau; and

   - when the portion comprises a single plateau, the instantaneous value ($R_z$) is equal to -1.

7. Method according to Claim 6, in which an alarm is triggered when the instantaneous value ($R_z$) is above a given value.

8. Method according to Claim 7, in which an alarm is triggered when the instantaneous value ($R_z$) is positive.

9. Method according to Claim 1, in which the quantity measured by the sensor (5) is characteristic of the longitudinal shear stresses undergone by the tyre tread.

10. Method according to Claim 9, in which the step of deducing a first instantaneous value ($\Delta L$) is such that:

    - when the portion comprises, on the entry side of the contact area, two successive positive peaks, the instantaneous value is the measurement of the length ($\Delta L$) separating the maxima of the two peaks; and
    - when the portion comprises a single positive peak, the instantaneous value ($\Delta L$) is zero.

11. Method according to one of either of Claims 9 and 10, in which the step of deducing a second instantaneous value ($A_x$) is such that:

    - when the portion comprises, on the entry side of the apparent area of contact, two successive positive peaks, the instantaneous value is the measurement of the amplitude ($A_x$) of the first positive peak; and
    - when the portion comprises a single positive peak, the instantaneous value ($A_x$) is zero.

12. Method according to any one of Claims 1 to 10, in which the sensor (5) measures both a characteristic quantity of the normal compressive stresses and a characteristic quantity of the longitudinal shear stresses undergone by the tyre tread.

13. Method according to any one of Claims 1 to 12, in which the water height ($h_w$) is deduced from the instantaneous value ($\Delta L$) using a chart.

14. Method according to any one of Claims 1 to 12, in which the water height ($h_w$) is deduced using the following equation:

$$h_w = K\left\{1 - \cos\left(\arcsin\frac{\Delta L}{K}\right)\right\}$$

where $h_w$ is the estimated water height, $\Delta L$ is the instantaneous value and K is a constant associated with the tyre.

15. Method according to Claim 14, in which the factor K is the Koutny transition zone radius ($R_K$).

16. Method according to one of Claims 1 to 15, in which the intensity of the hydroplaning is estimated from the quantity $1-S/S_0$, which is a function of two surfaces:

    - a first surface S determining the instantaneous area of direct contact of the tyre tread measured on wet ground at the speed of the vehicle; and
    - a second surface So determining the maximum ideal area of direct contact of the tyre tread on the same dry ground and/or for a low speed of the vehicle guaranteeing that hydroplaning cannot start.

17. Method according to Claim 16, in which the quantity $1-S/S_0$ characterizing the intensity of the hydroplaning is determined from:

    - the knowledge of at least a second instantaneous value ($\Delta E$, $R_z$, $A_x$);
    - an estimated calculation of a water height ($h_w$) present on the ground; and
    - an experimental chart representing the variation in the quantity $1-S/S_0$ as a function of the second instantaneous value ($\Delta E$, $R_z$, $A_x$) for various predetermined water heights ($h_w$).

18. Method according to one of the preceding claims, in which an alarm is triggered when the quantity $1-S/S_0$ exceeds a given threshold.

19. A device for detecting and estimating the intensity of hydroplaning of a tyre of a vehicle travelling on a wet road, comprising:

    - a tyre, the tread of which is equipped with one or more sensors (5) each capable of measuring a characteristic quantity of the stresses undergone by the tyre tread rolling on the ground;
    - means for transmitting a signal corresponding to the measurements of this characteristic quantity; and
    - a signal processing unit capable of extracting, from the transmitted signal, a signal portion corresponding to the number or to the duration of passage of the sensor or sensors in the area of contact of the tyre rolling on the ground,

    **characterized in that** it includes a program for implementing the method according to one of Claims 1 to 18 in the processing unit on the basis of the extracted signal.

**Patentansprüche**

1. Verfahren zur Erfassung und zur Schätzung der Stärke eines Aquaplaning-Phänomens eines Luftreifens eines Fahrzeugs, das sich auf einem nassen Boden einer Fahrbahn bewegt, wobei die Lauffläche des Luftreifens mit einem oder mehreren Sensoren (5) ausgestattet ist, die es je ermöglichen, eine Kenngröße der Beanspruchungen zu messen, die die Lauffläche lokal erfährt, wenn der Luftreifen auf dem Boden rollt, **dadurch gekennzeichnet, dass** es die folgenden Schritte aufweist:

- Messen der Kenngröße, wenn der Luftreifen auf dem Boden rollt;
- Erzeugen eines Signals entsprechend diesen Messwerten;
- Entnahme aus diesem Signal eines Abschnitts bezüglich des Durchgangs des Sensors oder der Sensoren durch den wahrnehmbaren Kontaktbereich des Luftreifens auf dem Boden;
- Ableiten von diesem Abschnitt des Signals eines ersten Augenblickswerts ($\Delta L$), der mit der Länge der Zone indirekten Kontakts des wahrnehmbaren Kontaktbereichs der Lauffläche des Luftreifens auf dem Boden verbunden ist, und eines zweiten Augenblickswerts ($\Delta E$, $R_z$, $A_x$), der mit der Stärke des Aquaplaning-Phänomens in der Zone indirekten Kontakts bezüglich des Rests des wahrnehmbaren Kontaktbereichs verbunden ist;
- Schätzen der Wasserhöhe ($h_e$) ausgehend von einer Berechnung, die den ersten abgeleiteten Augenblickswert ($\Delta L$) berücksichtigt;
- Schätzen der Stärke des Aquaplaning-Phänomens ausgehend von der Schätzung der Wasserhöhe ($h_e$) und vom zweiten Augenblickswert ($\Delta E$, $R_z$, $A_x$).

2. Verfahren nach Anspruch 1, bei dem die vom Sensor (5) gemessene Größe für die Druckbeanspruchungen kennzeichnend ist, die von der Lauffläche des Luftreifens in einer Richtung senkrecht zur Ebene der Fahrbahn erfahren werden.

3. Verfahren nach Anspruch 2, bei dem der Schritt der Ableitung eines ersten Augenblickswerts ($\Delta L$) folgendem entspricht:

- wenn der Abschnitt zwei aufeinanderfolgende Plateaus enthält, ist der Augenblickswert ($\Delta L$) der Messwert der Länge des ersten Plateaus auf der Seite des Eintritts in den wahrnehmbaren Kontaktbereich;
- wenn der Abschnitt nur ein Plateau enthält, ist der Augenblickswert Null.

4. Verfahren nach einem der Ansprüche 2 und 3, bei dem der Schritt der Ableitung eines zweiten Augenblickswerts ($\Delta E$) folgendem entspricht:

- der Ableitung des Signals,

- der Bestimmung der minimalen $\left(\dfrac{d\sigma_z}{d}\right)\min$ und maximalen Werte $\left(\dfrac{d\sigma_z}{d}\right)\max$ des abgeleiteten Signals sowie ihrer Position ($l_{min}$, $l_{max}$); und
- der Berechnung des Augenblickswerts ($\Delta E$) entsprechend der Positionsabweichung zwischen dem minimalen und dem maximalen Wert des abgeleiteten Signals:

$$\Delta E = l_{max} - l_{min}$$

5. Verfahren nach Anspruch 4, bei dem ein Alarm ausgelöst wird, wenn der zweite Augenblickswert höher ist als ein gegebener Schwellwert.

6. Verfahren nach einem der Ansprüche 2 bis 4, bei dem der Schritt der Ableitung eines zweiten Augenblickswerts ($R_z$) folgendem entspricht:

- wenn der Abschnitt des Signals zwei aufeinanderfolgende Plateaus enthält, ist der Augenblickswert ($R_z$) gleich:

$$R_z = \frac{\sigma_{zi} - \sigma_{zd}}{\sigma_{zd}}$$

wobei $\sigma_{zi}$ die Amplitude der Druckbeanspruchungen des ersten Plateaus und $\sigma_{zd}$ die Amplitude der Druckbeanspruchungen des zweiten Plateaus darstellt; und

- wenn der Abschnitt nur ein Plateau enthält, ist der Augenblickswert ($R_z$) gleich -1.

7. Verfahren nach Anspruch 6, bei dem ein Alarm ausgelöst wird, wenn der Augenblickswert ($R_z$) höher ist als ein gegebener Wert.

8. Verfahren nach Anspruch 7, bei dem ein Alarm ausgelöst wird, wenn der Augenblickswert ($R_z$) positiv ist.

9. Verfahren nach Anspruch 1, bei dem die vom Sensor (5) gemessene Größe für die Längsscherbeanspruchungen kennzeichnend ist, die die Lauffläche des Luftreifens erfährt.

10. Verfahren nach Anspruch 9, bei dem der Schritt der Ableitung eines ersten Augenblickswerts ($\Delta L$) folgendem entspricht:

- wenn der Abschnitt auf der Seite des Eintritts in den Kontaktbereich zwei aufeinanderfolgende positive Spitzen enthält, ist der Augenblickswert der Messwert der Länge (ΔL), die die Maxima der zwei Spitzen trennt;
- wenn der Abschnitt nur eine positive Spitze enthält, ist der Augenblickswert (ΔL) Null.

**11.** Verfahren nach einem der Ansprüche 9 und 10, bei dem der Schritt der Ableitung eines zweiten Augenblickswerts ($A_x$) folgendem entspricht:

- wenn der Abschnitt auf der Seite des Eintritts in den wahrnehmbaren Kontaktbereich zwei aufeinanderfolgende positive Spitzen enthält, ist der Augenblickswert ($A_x$) der Messwert der Amplitude der ersten positiven Spitze;
- wenn der Abschnitt nur eine positive Spitze enthält, ist der Augenblickswert ($A_x$) Null.

**12.** Verfahren nach einem der Ansprüche 1 bis 10, bei dem der Sensor (5) sowohl eine Kenngröße der normalen Druckbeanspruchungen als auch eine Kenngröße der Längsscherbeanspruchungen misst, die die Lauffläche des Luftreifens erfahren.

**13.** Verfahren nach einem der Ansprüche 1 bis 12, bei dem die Wasserhöhe ($h_e$) vom Augenblickswert (ΔL) unter Verwendung eines Nomogramms abgeleitet wird.

**14.** Verfahren nach einem der Ansprüche 1 bis 12, bei dem die Wasserhöhe ($h_e$) unter Verwendung der folgenden Gleichung abgeleitet wird:

$$h_e = K\left\{1 - \cos\left(\arcsin\frac{\Delta L}{K}\right)\right\}$$

mit $h_e$ der geschätzten Wasserhöhe, ΔL dem Augenblickswert und K einem mit dem Luftreifen verbundenen konstanten Wert.

**15.** Verfahren nach Anspruch 14, bei dem der Faktor K der kleine Koutny-Anschlussradius ($R_K$) ist.

**16.** Verfahren nach einem der Ansprüche 1 bis 15, bei dem die Stärke des Aquaplaning-Phänomens ausgehend von der Größe $I - S/S_0$ geschätzt wird, die von zwei Flächen abhängt:

- einer ersten Fläche S, die eine Augenblicksfläche des direkten Kontaktbereichs der Lauffläche des Luftreifens gemessen auf einem nassen Boden bei der Geschwindigkeit des Fahrzeugs bestimmt; und
- eine zweite Fläche $S_0$, die den idealen maximalen direkten Kontaktbereich der Lauffläche des Luftreifens auf dem gleichen trockenen Boden und/oder für eine geringe Geschwindigkeit des Fahrzeugs bestimmt, die die Abwesenheit eines Beginns von Aquaplaning garantiert.

**17.** Verfahren nach Anspruch 16, bei dem die Größe $I - S/S_0$ bestimmt wird, die die Stärke des Aquaplaning-Phänomens kennzeichnet, ausgehend von:

- der Kenntnis mindestens eines zweiten Augenblickswerts ($\Delta E$, $R_z$, $A_x$);
- einer geschätzten Berechnung einer am Boden vorhandenen Wasserhöhe ($h_e$); und
- einem experimentellen Nomogramm, das die Entwicklung der Größe $I - S/S_0$ in Abhängigkeit vom zweiten Augenblickswert ($\Delta E$, $R_z$, $A_x$) darstellt, und dies für verschiedene vorbestimmte Wasserhöhen ($h_e$).

**18.** Verfahren nach einem der Ansprüche 16 oder 17, bei dem ein Alarm ausgelöst wird, wenn die Größe $I - S/S_0$ einen gegebenen Schwellwert überschreitet.

**19.** Vorrichtung zur Erfassung und Schätzung der Stärke eines Aquaplaning-Phänomens eines Luftreifens eines Fahrzeugs, das sich auf einem nassen Boden einer Fahrbahn bewegt, die folgendes aufweist:

- einen Luftreifen, wobei eine Lauffläche mit einem oder mehreren Sensoren (5) ausgestattet ist, die es je ermöglichen, eine Kenngröße der von der Lauffläche des Luftreifens beim Rollen auf dem Boden erfahrenen Beanspruchungen zu messen,
- Einrichtungen zur Übertragung eines Signals, das den Messwerten dieser Kenngröße entspricht; und
- eine Signalverarbeitungseinheit, die fähig ist, aus dem übertragenen Signal einen Signalabschnitt zu entnehmen, der der Anzahl oder der Durchgangsdauer des Sensors oder der Sensoren durch den Kontaktbereich des auf dem Boden rollenden Luftreifens entspricht;

**dadurch gekennzeichnet, dass** sie in der Verarbeitungseinheit ein Programm aufweist, um ausgehend von dem entnommenen Signal das Verfahren nach einem der Ansprüche 1 bis 18 durchzuführen.

$$Z \quad X$$
$$Y$$

1     4     2

5    3

6

**Fig. 1**

8

11               12

5     7          23

| µP |

| Extraction | 24

| Mesure de contraintes | | Données sol sec | 25

| Comparaison | 26

| Calcul $\Delta L$ $\Delta E$ $A_x$ $R$ | 29

9         | Estimation $h_e$ | 30

| Estimation $1-S/S_0$ |

13

10

| ABS ESP ASR | 14

**Fig. 2**

Fig. 3

Fig. 4

Fig. 5

Fig. 6

Fig. 7

**Fig. 8**

**Fig. 9**

**Fig. 10**

**Fig. 11**

**Fig. 12**

**Fig. 13**

Fig. 14

Fig. 15

Fig. 16

**EP 1 977 942 B1**

## RÉFÉRENCES CITÉES DANS LA DESCRIPTION

**Documents brevets cités dans la description**

- US 5502433 A
- EP 1498291 A
- US 6666079 B
- EP 1350640 A